# EUROPÄISCHE PATENTSCHRIFT

(11) **EP 1 736 382 B1**
(45) Veröffentlichungstag und Bekanntmachung des Hinweises auf die Patenterteilung: **28.11.2007**
(21) Anmeldenummer: 06012820.4
(22) Anmeldetag: 22.06.2006
(51) Int. Cl.: B60R 22/03

(54) **Bringvorrichtung für Fahrzeugsicherheitsgurte**
Safety belt presenting device for vehicles
Dispositif apporteur de ceintures de sécurité pour véhicules

(30) Priorität: 24.06.2005 DE 102005029695
(43) Veröffentlichungstag der Anmeldung: 27.12.2006
(73) Patentinhaber: Wilhelm Karmann GmbH, 49084 Osnabrück (DE)
(72) Erfinder: Kasubke, Wolfgang, 49124 Georgsmarienhütte (DE)

(56) Entgegenhaltungen:
- DE-A1- 3 111 919
- DE-A1- 3 302 163
- DE-A1- 3 744 578
- DE-B- 2 112 885
- US-B1- 6 279 954

## Beschreibung

Die Erfindung betrifft eine Vorrichtung zum Verlagern eines Sicherheitsgurts eines Fahrzeugs in eine griffgünstige Position.

Eine derartige Vorrichtung ist bspw. aus der DE 33 02 163 C2 bekannt: In einer Führung einer Tür eines Fahrzeugs ist ein Mitnehmer verfahrbar angeordnet, wobei der Mitnehmer eine Aufnahmefläche zum Anlegen an ein Gurtband eines Sicherheitsgurts aufweist und zwischen einer eingeklappten und ausgeklappten Position verschwenkbar ist. Der Mitnehmer wird aus einer Ruhelage, in der er eingeklappt ist, gegen eine Schräge verfahren, wodurch er ausklappt und ungefähr senkrecht zu der Führung stehend in ein Fahrzeuginneres ragt. In dieser Stellung hintergreift der Mitnehmer das Gurtband des Sicherheitsgurts und wird mit dem Gurtband nach vorne (in Fahrtrichtung) verfahren, um das Gurtband in eine griffgünstige Position für einen Fahrer des Fahrzeugs zu verlagern. Ist das Gurtband von dem Fahrer gegriffen, so fährt der Antrieb den Mitnehmer weiter nach vorne gegen einen Anschlag, wodurch dieser einklappt. Nachfolgend schaltet der Antrieb um und verfährt den Mitnehmer nach hinten in seine Ruhestellung.

Ein Nachteil einer derartigen Vorrichtung ist, dass der Mitnehmer starr mit dem Antrieb gekoppelt ist: Wird der Mitnehmer von dem Antrieb nach vorne verfahren und fährt er dabei gegen ein Hindernis, z.B. einen Arm des Fahrers, so klappt der Mitnehmer zwar ein, wird jedoch durch den Antrieb weiter nach vorne verfahren. Dabei kann es vorkommen, dass ein Armteil eines Kleidungsstücks des Fahrers von dem Mitnehmer zwischen diesem und der Tür eingeklemmt wird, wodurch dieses mit dem Mitnehmer nach vorne verfahren wird.

Aufgabe der Erfindung ist es, eine Vorrichtung zum Verlagern eines Sicherheitsgurts eines Fahrzeugs in eine griffgünstige Position bereit zu stellen, die dem Fahrer des Fahrzeugs eine erhöhte Sicherheit bietet.

Diese Aufgabe wird erfindungsgemäß durch eine Vorrichtung zum Verlagern eines Sicherheitsgurts eines Fahrzeugs in eine griffgünstige Position mit einer Führung, die ein vorderes und hinteres Ende aufweist und in einer Fahrzeugseitenwand anzuordnen ist, einem zwischen einer Ruhe- und einer Arbeitsposition entlang der Führung bewegbaren Lagerelement, in dem ein Gurtbandmitnehmer zum Anlegen an ein Gurtband des Sicherheitsgurts und ein damit verbundener Betätigungsarm zwischen einer eingeklappten und ausgeklappten Position um eine Schwenkachse schwenkbar sind, wobei eine Rückstellfeder den Gurtbandmitnehmer in Richtung auf die eingeklappte Position vorspannt, und einem Betätigungselement mit einem Lagerelementmitnehmer, wobei das Betätigungselement mittels eines Antriebs entlang der Führung hin und her verfahrbar ist, wobei das Betätigungselement gegen den Betätigungsarm, die Rückstellfeder spannend, verfahrbar ist, so daß der Gurtbandmitnehmer etwa senkrecht zu der Führung stehend, das Gurtband hintergreifend, in ein Fahrzeuginneres ragt und dann eine lösbare Schnappverbindung zwischen dem Lagerelementmitnehmer und dem Lagerelement ausgebildet ist, durch die der Lagerelementmitnehmer eine Verschiebekraft auf das Lagerelement ausübt, wenn der Antrieb das Betätigungselement nach vorne fährt, um das Lagerelement mit dem Gurtband nach vorne in eine griffgünstige Position zu verfahren, wobei die Schnappverbindung derart ausgebildet ist, dass sie gelöst wird, wenn die Verschiebekraft die Nennkraft überschreitet.

Vorteilhaft ist der Führung ein Entriegelungsanschlag zugeordnet, der die griffgünstige Position festlegt und einen Anschlag für das Lagerelement beim Verfahren in Vorwärtsrichtung bildet.

Bevorzugt ist ein Abschnitt der Führung in einer Tür des Fahrzeugs (Türführung) und ein Abschnitt der Führung in einem Säulenbereich des Fahrzeugs(Säulenführung), der in Fahrtrichtung hinter der Tür liegt, gebildet.

Bevorzugt ist eine Blende in einem Schlitz der Fahrzeugseitenwand angeordnet, entlang dem das Lagerelement verfährt.

Vorteilhaft ist an einem vorderen Ende des Betätigungselements ein Blendenmitnehmer vorgesehen.

Bevorzugt umfaßt die Führung einen ersten und einen zweiten Führungskanal.

Vorteilhaft umfaßt die Vorrichtung zum Verlagern eines Sicherheitsgurts eine Gehäuseoberschale und eine Gehäuseunterschale in der Türführung und der Säulenführung, wobei in den Schalen jeweils eine erste und eine zweite profilierte Führungsschiene derart gebildet sind, dass die erste (zweite) Führungsschiene der Gehäuseoberschale der ersten (zweiten) Führungsschiene der jeweiligen Gehäuseunterschale gegenüberliegt, um derart den ersten (zweiten) Führungskanal zu bilden.

Bevorzugt ist die erste Führungsschiene durch eine nutartige Vertiefung in der Gehäuseoberschale bzw. der zugehörigen Gehäuseunterschale gebildet.

Bevorzugt ist die zweite Führungsschiene durch einen vorstehenden Schienenstrang der Gehäuseoberschale bzw. der zugehörigen Gehäuseunterschale gebildet.

Vorteilhaft umfaßt das Lagerelement einen Führungszapfen zur Aufnahme in den ersten Führungskanal und einen Lagerprofilabschnitt zur Aufnahme in den ersten und zweiten Führungskanal.

Bevorzugt weist der Lagerprofilabschnitt zwei gegenüberliegende Profilvorsprünge, die jeweils passend zu der und zur Aufnahme in der ersten Führungsschiene gebildet sind, und beabstandet dazu zwei gegenüberliegende Einschnürungen, die jeweils passend zu der und zur Aufnahme durch die zweiten Führungsschiene gebildet sind, auf.

Vorteilhaft weist der Führungszapfen in Fahrtrichtung eine Länge auf, die größer als ein Türspalt ist.

Vorteilhaft ist der Betätigungsarm kreisbogenförmig gebildet.

Bevorzugt ist die Rückstellfeder eine Schenkelfeder.

Bevorzugt greift die Schenkelfeder mit einem Ende an dem Betätigungsarm und mit dem anderen Ende an dem Führungszapfen an.

Bevorzugt ist das Betätigungselement eine Betätigungsstange mit einer Zahnstange, die über ein Zahnrad mit dem Antrieb, insbesondere einem Servomotor, in Eingriff steht.

Vorteilhaft weist die Blende einen Blendenprofilabschnitt auf, der in der Führung zwischen dem Lagerprofilabschnitt und dem Entriegelungsanschlag angeordnet ist.

Vorteilhaft ist der Entriegelungsanschlag in der Führung vorgesehen.

Bevorzugt ist bzw. sind der Entriegelungsanschlag und/oder der Blendenprofilabschnitt baugleich mit dem Lagerprofilabschnitt.

Vorteilhaft bilden der Betätigungsarm und der Gurtbandmitnehmer im wesentlichen eine L-Form.

Bevorzugt ist die Schwenkachse in einem Eckbereich der L-Form gebildet.

Bevorzugt ist der Blendenmitnehmer eine Federklammer.

Vorteilhaft ist der Lagerelementmitnehmer eine Arretierungsfeder mit einem Schubabschnitt.

Die Vorrichtung zum Verlagern eines Sicherheitsgurts ist bevorzugt in einer Tür des Fahrzeugs gebildet.

Die Erfindung wird nachfolgend anhand eines Ausführungsbeispiels unter Bezugnahme auf eine Zeichnung erläutert. Es zeigen:
- Fig. 1: eine perspektivische Ansicht auf eine erfindungsgemäße Vorrichtung in einer Tür eines Fahrzeugs, wobei die Vorrichtung in einer Ruheposition gezeigt ist;
- Fig. 2: eine vergrößerte Detailansicht der Fig. 1;
- Fig. 3: eine perspektivische Ansicht ähnlich zu der Fig. 1, wobei die Vorrichtung in einer Arbeitsposition gezeigt ist;
- Fig. 4: eine vergrößerte Detailansicht der Fig. 3;
- Fig. 5: eine Draufsicht auf die erfindungsgemäße Vorrichtung der Fig. 1 in einer Ruheposition;
- Fig. 6: eine Querschnittsansicht entlang der Linie VI-VI der Fig. 5;
- Fig. 7: eine Draufsicht ähnlich zu der Fig. 5, wobei ein Gurtbandmitnehmer der erfindungsgemäßen Vorrichtung an einem Gurtband des Sicherheitsgurts anliegt;
- Fig. 8: eine Draufsicht ähnlich zu der Fig. 7, die das Gurtband nach vorne verlagert zeigt;
- Fig. 9: eine Draufsicht ähnlich zu der Fig. 8, die zusätzlich einen Antrieb der Vorrichtung zeigt;
- Fig. 10: eine Draufsicht ähnlich zu der Fig. 9, die die Vorrichtung in einer Endposition zeigt, in der der Gurtbandmitnehmer eingeklappt ist; und
- Fig. 11 - 14: perspektivische Ansichten eines Blendenmitnehmers und eines vorderen Endes einer Blende;

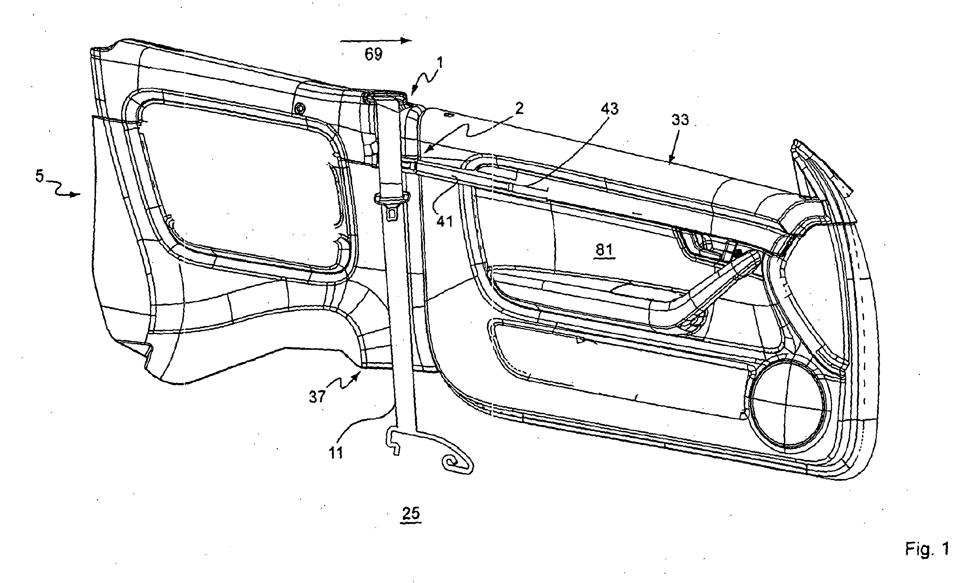

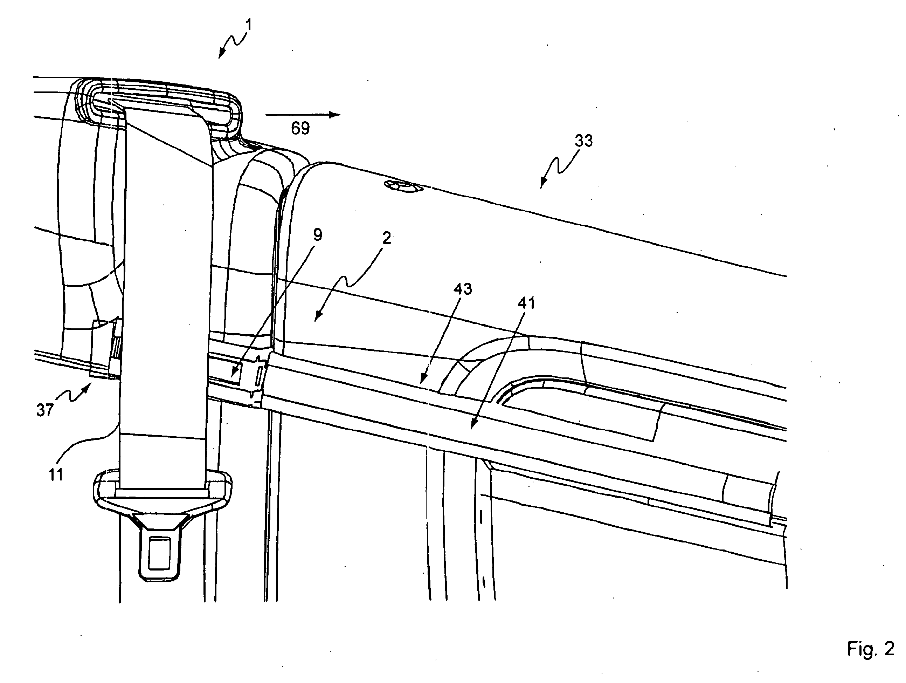

Fig. 1 zeigt einen Ausschnitt einer Fahrzeugseitenwand 5 eines Fahrzeugs. Die Fahrzeugseitenwand 5 umfaßt eine Tür 33, vorliegend eine Fahrertür, hinter der (Fahrtrichtung 69 bildet die Vorwärtsrichtung) ein Sicherheitsgurt 1 in einem Säulenbereich 37 des Fahrzeugs angeordnet ist. In der Tür 33 und dem Säulenbereich 37 ist eine Vorrichtung 2 zum Verlagern des Sicherheitsgurts 1 in eine griffgünstige Position angeordnet, wobei in Fig. 1 eine Ruheposition der Vorrichtung und in Fig. 2 ein vergrößerter Ausschnitt der Fig. 1 gezeigt ist.

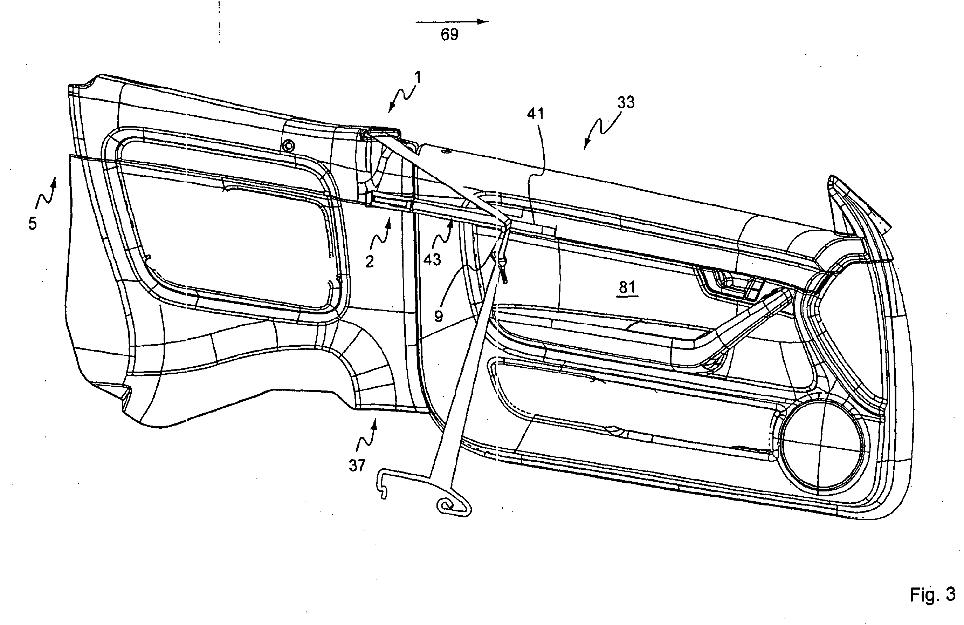

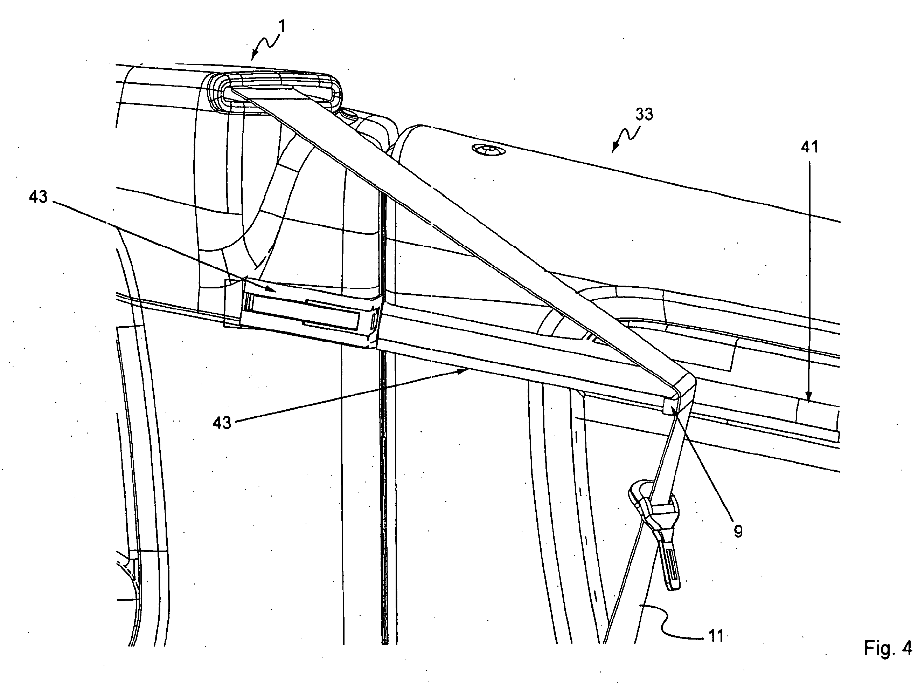

In Fig. 3 ist ein Gurtbandmitnehmer 9 der Vorrichtung gezeigt, der ein Gurtband 11 des Sicherheitsgurts 1 hintergreift und in einer griffgünstigen Position einem Fahrer des Fahrzeugs anbietet. Fig. 4 zeigt einen vergrößerten Ausschnitt der Fig. 3.

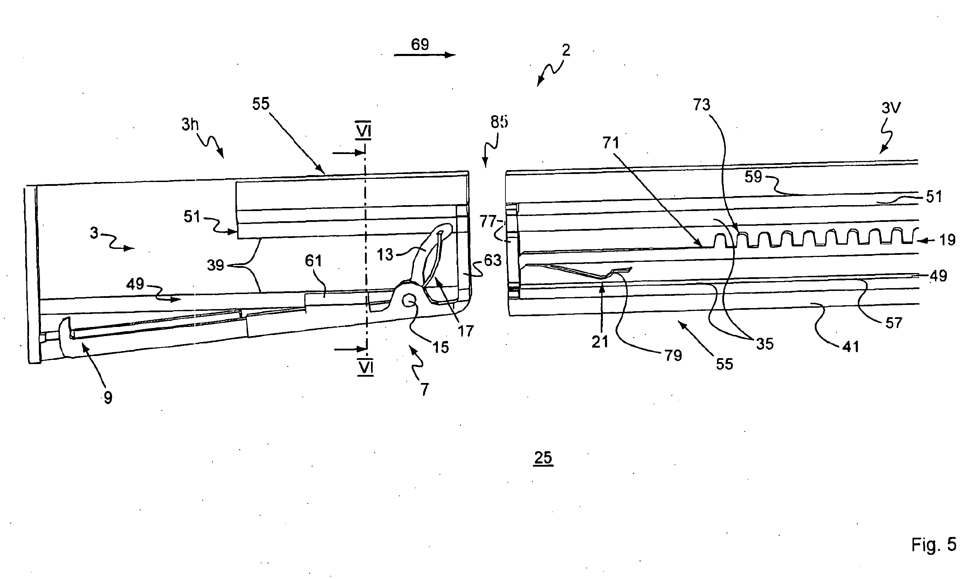

Fig. 5 zeigt eine Draufsicht auf die Vorrichtung 2. Die Vorrichtung 2 umfaßt eine Führung 3, die ein vorderes Ende 3v und ein hinteres Ende 3h aufweist. Die Führung 3 umfaßt einen Abschnitt, der in dem Säulenbereich 37 gebildet ist (Säulenführung 39), und einen Abschnitt, der in der Tür 33 des Fahrzeugs gebildet ist (Türführung 35), so dass diese durch einen Türspalt 85 getrennt sind.

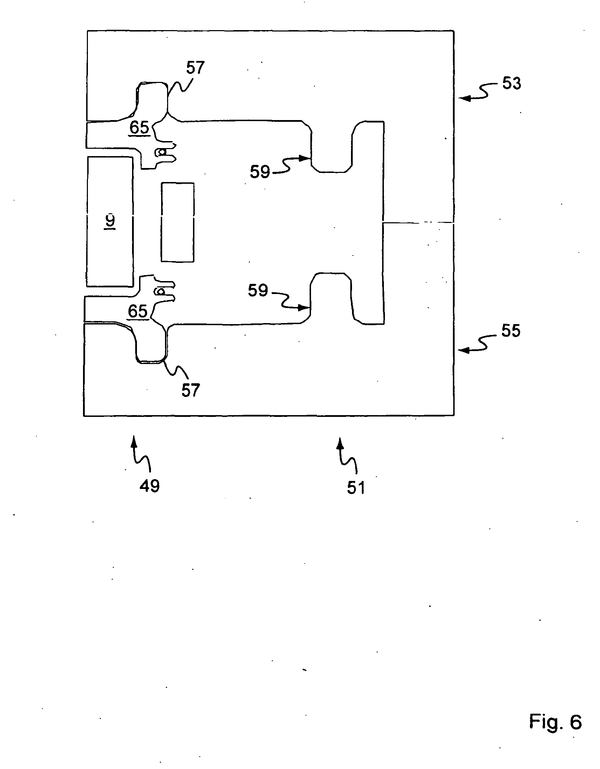

Fig. 6 zeigt die Führung 3 in einem Querschnitt entlang der Linie VI-VI der Fig. 5. Die Führung 3 weist einen ersten 49 und zweiten 51 Führungskanal auf, wobei der erste 49 (zweite 51) Führungskanal durch zwei gegenüberliegende erste 57 (zweite 59) profilierte Führungschienen gebildet ist, die jeweils in einer Gehäuseoberschale 53 und einer Gehäuseunterschale 55 gebildet sind.

Die erste profilierte Führungsschiene 57 ist jeweils als nutartige Vertiefung in der Gehäuseoberschale 53 bzw. in der Gehäuseunterschale 55 gebildet. Die zweite profilierte Führungsschiene 59 ist jeweils als vorstehender Schienenstrang der Gehäuseoberschale 53 bzw. der Gehäuseunterschale 55 gebildet.

Ein Lagerelement 7 ist in der Säulenführung 39 angeordnet und weist einen Betätigungsarm 13 und den Gurtbandmitnehmer 9 auf, die integral gebildet sind und um eine gemeinsame Schwenkachse 15 verschwenkbar sind. Der Gurtbandmitnehmer 9 wird über eine Rückstellfeder 17, die an dem Betätigungsarm 13 und dem Lagerelement 7 angreift, an dem Lagerelement 7 gehalten.

Das Lagerelement 7 weist einen Führungszapfen 61, der in dem ersten Führungskanal 49 geführt ist, und einen Lagerprofilabschnitt 63, der in dem ersten 49 und zweiten 51 Führungskanal geführt ist, auf.

Der Lagerprofilabschnitt 63 weist gegenüberliegende Profilvorsprünge 65 auf, die jeweils passend zu den ersten Führungsschiene 57 gebildet sind und die jeweils in einer ersten Führungsschiene 57 aufgenommen sind (s. Fig. 6). Ferner weist der Lagerprofilabschnitt 63 zwei gegenüberliegende Einschnürungen 67 auf, die passend zu den zweiten Führungsschienen 59 gebildet sind und in die jeweils eine der zweiten Führungsschienen 59 eingreift.

In der Türführung 35 ist eine Blende 41 angeordnet, wobei sich die Blende 41 durch einen Schlitz 43 einer Innenverkleidung 81 der Tür 33 in ein Fahrzeuginneres 25 erstreckt. Die Blende 41 weist einen Blendenprofilabschnitt 77 auf, der baugleich zu dem Lagerprofilabschnitt 63 ist.

In der Tür 33 ist ein Betätigungselement 19 angeordnet. Das Betätigungselement 19 weist vorliegend eine Betätigungsstange 71 auf, an deren hinteren Ende ein Lagerelementmitnehmer 21 gebildet ist und an der ferner eine Zahnstange 73 gebildet ist. Der Lagerelementmitnehmer 21 ist durch eine im wesentlichen hakenförmige Arretierungsfeder gebildet, die einen Schubabschnitt 79 umfaßt. Die Betätigungsstange 71 und die Zahnstange 73 sind parallel zu der Führung 3 angeordnet.

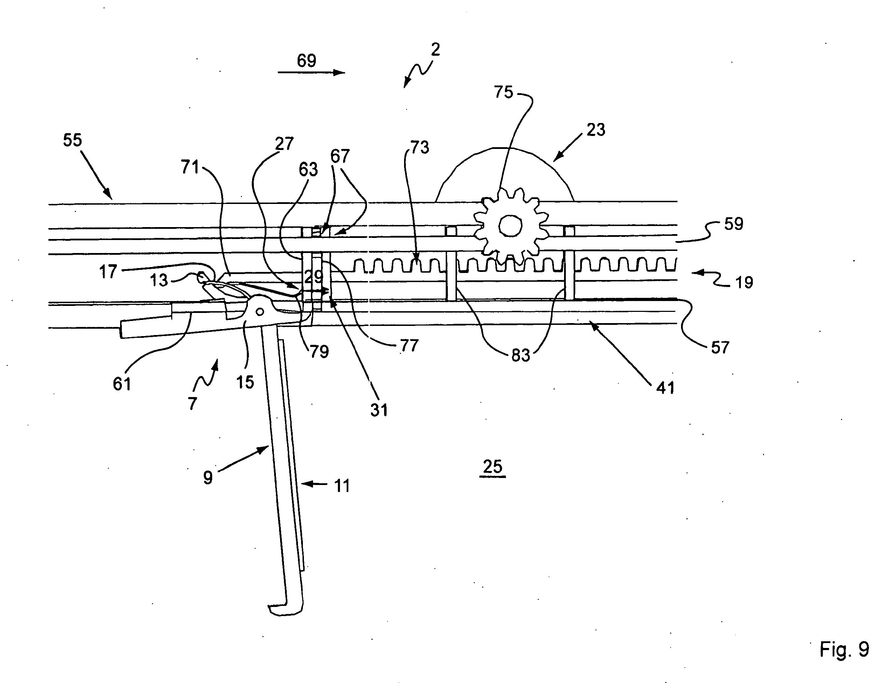

Die Zahnstange 3 steht über ein Zahnrad 75 mit einem Antrieb 23 in Eingriff (s. Fig. 9), wobei der Antrieb vorliegend durch einen Servomotor gebildet ist. Durch diese Anordnung ist die Betätigungsstange 71 mit der Zahnstange 73 entlang der Führung 3 hin und her verschiebbar, wobei die Stangen 71, 73 dabei durch eine Stangenführung 83 geführt sind.

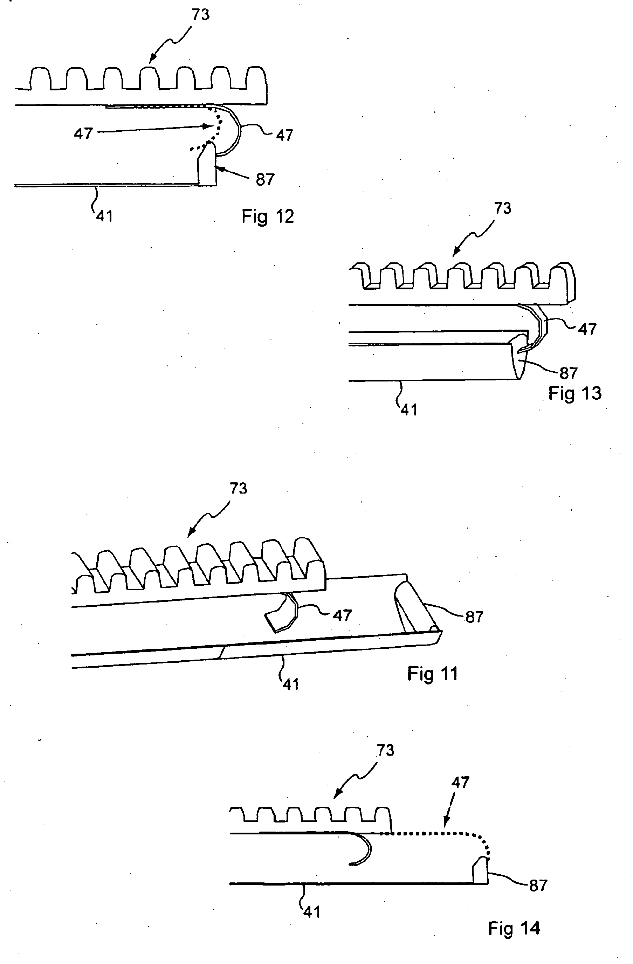

An einem vorderen Ende der Zahnstange 73 ist ein Blendenmitnehmer 47 angeordnet, der durch eine Federklammer gebildet ist. Ein Ende der Federklammer ist an einer dem Fahrzeuginneren 25 zugewandten Seitenfläche der Zahnstange 73 befestigt. Das andere Ende der Federklammer ist frei (s. Figuren 11 bis 14).

Unter Bezug auf die Figuren 5, 7, 8, 9 und 10 wird nachfolgend das Verlagern des Gurtbandes 11 in eine für den Fahrer günstige Griffposition beschrieben.

Fig. 5 zeigt die Vorrichtung 2 in einer Ruheposition (Ausgangsposition): In der Säulenführung 39 befindet sich das Lagerelement 7 mit eingeklappten Gurtbandmitnehmer 9 und in der Türführung 35 befindet sich das Betätigungselement 19 und die Blende 41.

Nachdem der Fahrer in das Fahrzeug eingestiegen und die Tür 33 geschlossen hat, wird der Antrieb 23 durch eine elektronische Steuerung derart aktiviert, dass die Betätigungsstange 71 nach hinten (in Richtung des Betätigungsarms 13) verfahren wird.

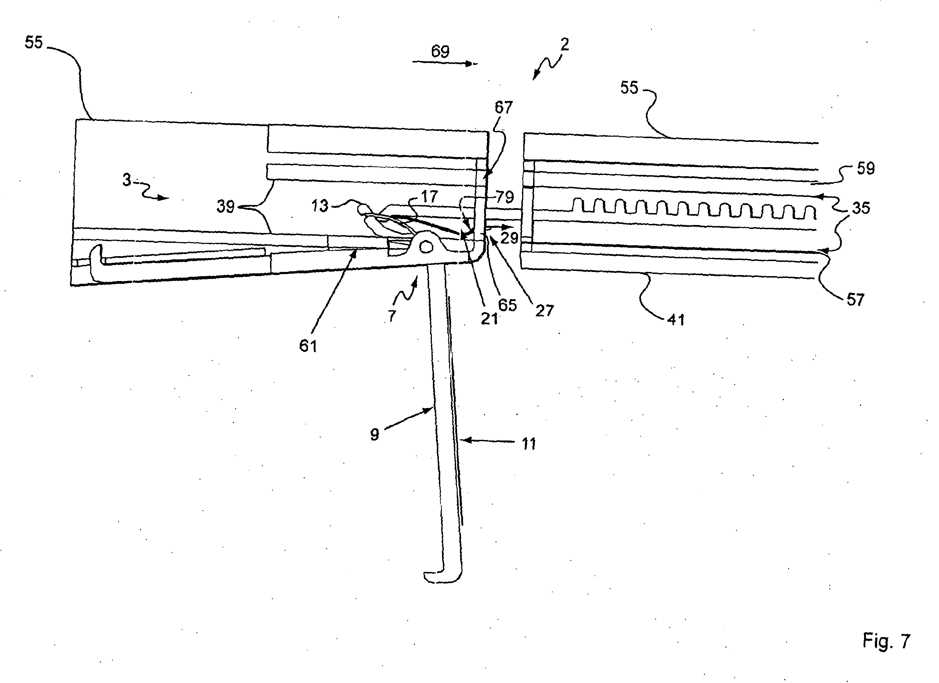

Fig. 7 zeigt die vollständig nach hinten verfahrene Betätigungsstange 71: Ein hinteres Ende der Betätigungsstange 71 ist gegen den kreisbogenförmig gebildeten Betätigungsarm 13 gefahren und hat diesen um die Schwenkachse 15 verschwenkt, wodurch der Gurtbandmitnehmer 9 ebenfalls um die Schwenkachse 15 verschwenkt ist und das Gurtband 11 des Sicherheitsgurts 1 hintergreift.

Ist die Betätigungsstange 71 vollständig nach hinten gefahren, so kommt der Lagerelementmitnehmer 21 in Eingriff mit dem Lagerelement 7: Der Schubabschnitt 79 der Arretierungsfeder greift an dem Lagerprofilabschnitt 63 an, wodurch eine mechanische Verbindung 27 zwischen dem Lagerelementmitnehmer 21 und dem Lagerelement 7 gebildet ist, durch die eine Verschiebekraft 29 von dem Lagerelementmitnehmer 21 auf das Lagerelement 7 ausgeübt werden kann.

Ist die Betätigungsstange 71 vollständig nach hinten gefahren, so wird der Antrieb 23 umgeschaltet und die Betätigungsstange 71 in die entgegengesetzte Richtung (Vorwärtsrichtung 69) verfahren, wobei der Schubabschnitt 79 nun die Verschiebekraft 29 auf den Lagerprofilabschnitt 63 ausübt, wodurch das Lagerelement 7 und das Gurtband 11 nach vorne in eine griffgünstige Position verfahren werden.

Das Lagerelement 7 überwindet dabei den Türspalt 85, wobei der Führungszapfen 61 bevorzugt eine Länge aufweist, die größer als der Türspalt 85 ist, so dass dieser während des Verfahrens immer geführt ist (entweder durch die Türführung 35 oder durch die Säulenführung 39).

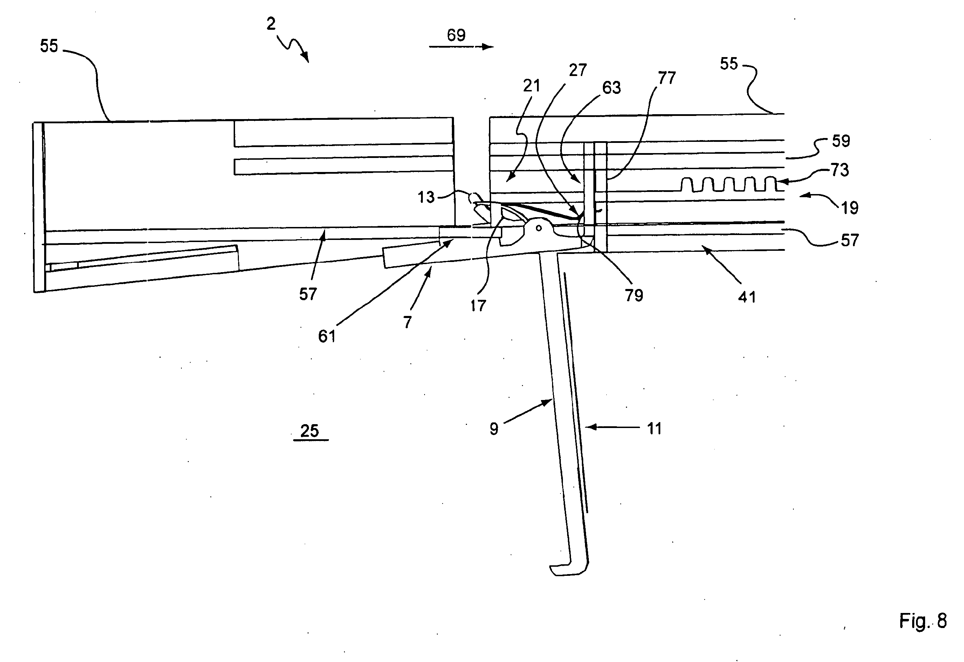

Der Lagerprofilabschnitt 63 schlägt nach Passieren des Türspaltes 85 an dem Blendenprofilabschnitt 77 an, wodurch dann auch die Blende 41 nach vorne verschoben wird, s. Fig. 8 und 9.

In Fig. 9 ist der Blendenprofilabschnitt 77 durch den Lagerprofilabschnitt 63 gegen einen Entriegelungsanschlag 31 gefahren, wodurch der Verfahrweg des Gurtbandmitnehmers 9 beendet ist. Das Gurtband 9 befindet sich nun in einer griffgünstigen Position und der Fahrer des Fahrzeugs kann das Gurtband 11 bequem greifen.

Die Lage des Entriegelungsanschlags 31 innerhalb der Führung 3 legt somit die "griffgünstige Lage" fest. Um diese griffgünstige Lage an individuelle Körpergrößen von Fahrern des Fahrzeugs anzupassen, kann vorgesehen sein, dass der Entriegelungsanschlag 31 entlang der Führung 3 verschieblich ist (motorisch oder von Hand).

Zu einem bestimmten Zeitpunkt nach Erreichen dieser griffgünstigen Lage wird der Antrieb 23 erneut derart aktiviert, daß die Betätigungsstange 71 nach vorne verschoben wird. Die durch den Antrieb 23 hervorgerufene Kraft wird kontinuierlich erhöht, so dass die von dem Antrieb 23 hervorgerufene Kraft zu einem gewissen Zeitpunkt eine Nennkraft überschreitet, wodurch der Schubabschnitt 79 über den Lagerprofilabschnitt 63 gleitet und somit die mechanische Verbindung zwischen dem Lagerelement 7 und dem Lagerelementmitnehmer 21 gelöst wird.

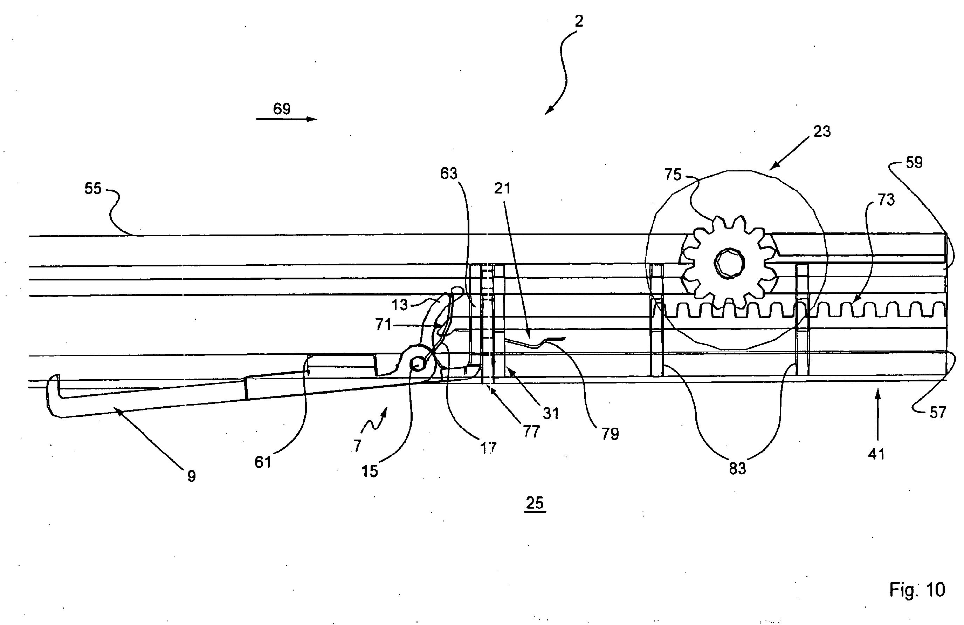

Fig. 10 zeigt die Situation kurz nachdem der Schubabschnitt 79 über den Lagerprofilabschnitt 63 geglitten ist (Die Betätigungsstange 71 ist vollständig nach vorne gefahren): Die Rückstellfeder 17 hat den Gurtbandmitnehmer 9 zurück an das Lagerelement 7 verschwenkt und das hintere Ende der Betätigungsstange 71 (und auch der Lagerelementmitnehmer 21) steht nicht mehr in Eingriff mit dem Lagerelement 7.

Unter Bezug auf die Fig. 11 bis 14 werden nachfolgend die Vorgänge an dem vorderen Ende der Betätigungsstange 71 beschrieben:
Fig. 11 zeigt die Federklammer 47 und die Blende 41 zu dem Zeitpunkt, in dem der Blendenprofilabschnitt 77 an dem Entriegelungsanschlag 31 anschlägt.
Fig. 12 zeigt die Federklammer 47 zu dem Zeitpunkt, in dem die Betätigungsstange 71 vollständig nach vorne gefahren ist: Das freie Ende der Federklammer schiebt sich über eine Vorderseite 87 der Blende 41 und hintergreift diese.
Fig. 13 zeigt die Federklammer 47, wenn die Betätigungsstange 71 vollständig nach vorne gefahren ist: Die Federklammer 47 hintergreift die Vorderseite 87 der Blende 41. Nun wird der Antrieb 23 umgeschaltet, wodurch die Betätigungsstange 71 nach hinten gefahren wird.

Wird die Betätigungsstange 71 nach hinten verfahren, so wird die Blende 41 mit ihrem Blendenprofilabschnitt 77 ebenfalls nach hinten verfahren, weil die Federklammer 47 die Blende 41 nach hinten schiebt.

Dadurch, dass der Blendenprofilabschnitt 77 nach hinten verschoben wird, an dem der Lagerprofilabschnitt 63 anliegt, wird auch das Lagerelement 7 nach hinten verschoben.

Da das Lagerelement 7 somit über die Blende 41 nach hinten geschoben wird, muß die Blende 41 eine minimale Schubfestigkeit aufweisen, die die Kraftübertragung von der Federklammer 47 auf den Blendenprofilabschnitt 77 sicherstellt.

Schlägt der Blendenprofilabschnitt 77 an einem hinteren Ende der Türführung 35 an, so wird die Betätigungsstange 71 noch weiter nach hinten verfahren, um das Lagerelement 7 vollständig in die Säulenführung 39 zu fahren und die Federklammer 47 aus ihrem Eingriff mit der Blende 41 zu lösen:

Liegt der Blendenprofilabschnitt 77 an dem hinteren Ende der Türführung 35 an und wird die Betätigungsstange 71 weiter nach hinten verfahren, so kann die Betätigungsstange keine Kraft mehr über die Blende 41 auf das Lagerelement 7 übertragen. Statt dessen drückt das hintere Ende der Betätigungsstange 71 gegen den Betätigungsarm 13, um das Lagerelement 7 in die Säulenführung 39 zu verschieben. Die Federkraft der Rückstellfeder 17 ist geeignet gewählt, so dass der Gurtbandmitnehmer 9 dabei nicht ausschwenkt, jedoch das Lagerelement 7 nach hinten verschoben wird.

Ist das Lagerelement 7 vollständig in die Säulenführung 39 gefahren, so nimmt die Federklammer 47 die in Fig. 14 gestrichelt dargestellte Lage ein, wodurch diese sich von der Blende 41 löst, indem das freie Ende der Federklammer über die Vorderseite 87 der Blende 41 zurückschnappt (durchgezogen dargestellte Federklammer 47). Nachfolgend wird der Antrieb erneut umgeschaltet und die Betätigungsstange 71 verfährt nach vorne in die in Fig. 5 dargestellte Ausgangsposition.

Die mechanische Verbindung zwischen dem Lagerelement 7 und dem Lagerelementmitnehmer 21 dient somit dazu, eine Verschiebekraft 29 von dem Lagerelementmitnehmer 21 auf das Lagerelement 7 zu übertragen, wodurch der Gurtbandmitnehmer 9 mit dem Gurtband 11 nach vorne in eine griffgünstige Position bewegt wird. Die mechanische Verbindung ist ferner so gestaltet, dass sie gelöst wird, wenn die Verschiebekraft 29 eine vorbestimmte Nennkraft überschreitet.

Schlägt der Gurtbandmitnehmer 9 somit während des Verfahrens nach vorne an einem Hindernis an und überschreitet die dadurch auf den Gurtbandmitnehmer 9 wirkende Kraft eine vorbestimmte Nennkraft, so löst sich die mechanische Verbindung zwischen dem Lagerelementmitnehmer 21 und dem Lagerelement 7 (der Schubabschnitt 79 des Lagerelementmitnehmers 21 gleitet über den Lagerprofilabschnitt 63), wodurch der Lagerelementmitnehmer 21 das Lagerelement 7 nicht weiter nach vorne bewegt, sondern dieses an seinem Ort verbleibt, und die Rückstellfeder 17 den Gurtbandmitnehmer 9 in die eingeklappte Position schwenkt.

Die Betätigungsstange 71 kann dann wahlweise in die griffgünstige Position verfahren werden oder an ihrem Ort verbleiben (d.h. der Antrieb abgeschaltet werden). Nach einer gewissen Zeit (Zeitsteuerung) oder auf Anforderung des Fahrers wird der Antrieb 23 aktiviert, um die Betätigungsstange 71 und das Lagerelement 7 zurück in die Ausgangsposition zu verfahren.

Die mechanische Verbindung wird über einen lösbaren Schnappverschluß realisiert, der sich ab einer Nennkraft löst.

Die Verschiebekraft kann, je nach Gestaltung der mechanischen Verbindung, eine Zug- oder Druckkraft sein.

### BEZUGSZEICHENLISTE

- 1: Sicherheitsgurt
- 2: Vorrichtung zum Verlagern des Sicherheitsgurts
- 3: Führung
- 3v: vorderes Ende der Führung
- 3h: hinteres Ende der Führung
- 5: Fahrzeugseitenwand
- 7: Lagerelement
- 9: Gurtbandmitnehmer
- 11: Gurtband des Sicherheitsgurts
- 13: Betätigungsarm
- 15: Schwenkachse
- 17: Rückstellfeder
- 19: Betätigungselement
- 21: Lagerelementmitnehmer
- 23: Antrieb
- 25: Fahrzeuginneres
- 27: Schnappverbindung
- 29: Verschiebekraft
- 31: Entriegelungsanschlag
- 33: Tür
- 35: Türführung
- 37: Säulenbereich des Fahrzeugs
- 39: Säulenführung
- 41: Blende
- 43: Schlitz
- 47: Blendenmitnehmer (Federklammer)
- 49: erster Führungskanal
- 51: zweiter Führungskanal
- 53: Gehäuseoberschale
- 55: Gehäuseunterschale
- 57: erste profilierte Führungsschiene (nutartige Vertiefung)
- 59: zweite profilierte Führungsschiene (vorstehender Schienenstrang)
- 61: Führungszapfen
- 63: Lagerprofilabschnitt
- 65: Profilvorsprung
- 67: Einschnürung
- 69: Fahrtrichtung (Vorwärtsrichtung)
- 71: Betätigungsstange
- 73: Zahnstange
- 75: Zahnrad
- 77: Blendenprofilabschnitt
- 79: Schubabschnitt des Lagerelementmitnehmers (Arretierungsfeder)
- 81: Innenverkleidung der Tür
- 83: Stangenführung
- 85: Türspalt
- 87: Vorderseite der Blende

## Patentansprüche

1. Vorrichtung (2) zum Verlagern eines Sicherheitsgurts (1) eines Fahrzeugs in eine griffgünstige Position mit einer Führung (3), die ein vorderes (3v) und hinteres (3h) Ende aufweist und in einer Fahrzeugseitenwand (5) anzuordnen ist, einem zwischen einer Ruhe- und einer Arbeitsposition entlang der Führung (3) bewegbaren Lagerelement (7), in dem ein Gurtbandmitnehmer (9) zum Anlegen an ein Gurtband (11) des Sicherheitsgurts (1) zwischen einer eingeklappten und ausgeklappten Position um eine Schwenkachse (15) schwenkbar ist, wobei eine Rückstellfeder (17) den Gurtbandmitnehmer (9) in Richtung auf die eingeklappte Position vorspannt, und einem Betätigungselement (19) mit einem Lagerelementmitnehmer (21), wobei das Betätigungselement (19) mittels eines Antriebs (23) entlang der Führung (3) hin und her verfahrbar ist, **dadurch gekennzeichnet, daß** das Betätigungselement (19) gegen einen mit dem Gurtbandmitnehmer (9) integral verbundenen Betätigungsarm (13), die Rückstellfeder (17) spannend, verfahrbar ist, so daß der Gurtbandmitnehmer (9) etwa senkrecht zu der Führung (3) stehend, das Gurtband (9) hintergreifend, in ein Fahrzeuginneres (25) ragt und dann eine lösbare Schnappverbindung (27) zwischen dem Lagerelementmitnehmer (21) und dem Lagerelement (7) ausgebildet ist, durch die der Lagerelementmitnehmer (21) eine Verschiebekraft (29)auf das Lagerelement (7) ausübt, wenn der Antrieb (23) das Betätigungselement (19) nach vorne fährt, um das Lagerelement (7) mit dem Gurtband (11) nach vorne in eine griffgünstige Position zu verfahren, wobei die Schnappverbindung (27) derart ausgebildet ist, dass sie gelöst wird, wenn die Verschiebekraft (29) die Nennkraft überschreitet.

2. Vorrichtung nach Anspruch 1,
**dadurch gekennzeichnet, dass**
der Führung (3) ein Entriegelungsanschlag (31) zugeordnet ist, der die griffgünstige Position festlegt und einen Anschlag für das Lagerelement (7) beim Verfahren in Vorwärtsrichtung (69) bildet.

3. Vorrichtung nach Anspruch 1 oder 2,
**dadurch gekennzeichnet, dass**
ein Abschnitt der Führung (3) in einer Tür (33) des Fahrzeugs (Türführung (35)) und ein Abschnitt der Führung (3) in einem Säulenbereich (37) des Fahrzeugs (Säulenführung (39)), der in Fahrtrichtung (69) hinter der Tür (33) liegt, gebildet ist.

4. Vorrichtung nach einem der vorangehenden Ansprüche,
**dadurch gekennzeichnet, dass**
eine Blende (41) in einem Schlitz (43) der Fahrzeugseitenwand (5) angeordnet ist, entlang dem das Lagerelement (7) verfährt.

5. Vorrichtung nach einem der vorangehenden Ansprüche,
**dadurch gekennzeichnet, dass**
an einem vorderen Ende (3v) des Betätigungselements (19) ein Blendenmitnehmer (47) vorgesehen ist.

6. Vorrichtung nach einem der vorangehenden Ansprüche,
**dadurch gekennzeichnet, dass**
die Führung (3) einen ersten (49) und einen zweiten (51) Führungskanal umfaßt.

7. Vorrichtung nach Anspruch 3 und 6,
**dadurch gekennzeichnet, dass**
diese eine Gehäuseoberschale (53) und eine Gehäuseunterschale (55) in der Türführung (35) und der Säulenführung (39) umfasst, wobei in den Schalen (53, 55) jeweils eine erste (57) und eine zweite (59) profilierte Führungsschiene derart gebildet sind, dass die erste (zweite) Führungsschiene (57, 59) der Gehäuseoberschale (53) der ersten (zweiten) Führungsschiene (57, 59) der jeweiligen Gehäuseunterschale (55) gegenüberliegt, um derart den ersten (zweiten) Führungskanal (49, 51) zu bilden.

8. Vorrichtung nach Anspruch 7,
**dadurch gekennzeichnet, dass**
die erste Führungsschiene (57) durch eine nutartige Vertiefung in der Gehäuseoberschale (53) bzw. der zugehörigen Gehäuseunterschale (55) gebildet ist.

9. Vorrichtung nach einem der Ansprüche 7 oder 8,
**dadurch gekennzeichnet, dass**
die zweite Führungsschiene (59) durch einen vorstehenden Schienenstrang der Gehäuseoberschale (53) bzw. der zugehörigen Gehäuseunterschale (55) gebildet ist.

10. Vorrichtung nach Anspruch 6 und 7,
**dadurch gekennzeichnet, dass**
das Lagerelement (7) einen Führungszapfen (61) zur Aufnahme in den ersten Führungskanal (49) und einen Lagerprofilabschnitt (63) zur Aufnahme in den ersten und zweiten Führungskanal (49, 51) umfasst.

11. Vorrichtung nach Anspruch 8, 9 und 10,
**dadurch gekennzeichnet, dass**
der Lagerprofilabschnitt (63) zwei gegenüberliegende Profilvorsprünge (65), die jeweils passend zu der und zur Aufnahme in der ersten Führungsschiene (57) gebildet sind, und beabstandet dazu zwei gegenüberliegende Einschnürungen (67), die jeweils passend zu der und zur Aufnahme durch die zweiten Führungsschiene (59) gebildet sind, aufweist.

12. Vorrichtung nach Anspruch 10,
**dadurch gekennzeichnet, dass**
der Führungszapfen (61) in Fahrtrichtung (69) eine Länge aufweist, die größer als ein Türspalt (85) ist.

13. Vorrichtung nach einem der vorangehenden Ansprüche,
**dadurch gekennzeichnet, dass** der Betätigungsarm (13) kreisbogenförmig gebildet ist.

14. Vorrichtung nach einem der vorangehenden Ansprüche,
**dadurch gekennzeichnet, dass** die Rückstellfeder (17) eine Schenkelfeder ist.

15. Vorrichtung nach Anspruch 14,
**dadurch gekennzeichnet, dass**
die Schenkelfeder mit einem Ende an dem Betätigungsarm (13) und mit dem anderen Ende an dem Führungszapfen (61) angreift.

16. Vorrichtung nach einem der vorangehenden Ansprüche,
**dadurch gekennzeichnet, dass**
das Betätigungselement (19) eine Betätigungsstange (71) mit einer Zahnstange (73) ist, die über ein Zahnrad (75) ,mit dem Antrieb (23), insbesondere einem Servomotor, in Eingriff steht.

17. Vorrichtung nach einem der Ansprüche 11 bis 16,
**dadurch gekennzeichnet, dass**
die Blende (41) einen Blendenprofilabschnitt (77) aufweist, der in der Führung (3) zwischen dem Lagerprofilabschnitt (63) und dem Entriegelungsanschlag (31) angeordnet ist.

18. Vorrichtung nach einem der vorangehenden Ansprüche,
**dadurch gekennzeichnet, dass**
der Entriegelungsanschlag (31) in der Führung (3) vorgesehen ist.

19. Vorrichtung nach Anspruch 11 und 18,
**dadurch gekennzeichnet, dass**
der Entriegelungsanschlag (31) und/oder der Blendenprofilabschnitt (77) baugleich mit dem Lagerprofilabschnitt (63) ist bzw. sind.

20. Vorrichtung nach einem der vorangehenden Ansprüche,
**dadurch gekennzeichnet, dass**
der Betätigungsarm (13) und der Gurtbandmitnehmer (9) im wesentlichen eine L-Form bilden.

21. Vorrichtung nach Anspruch 20,
**dadurch gekennzeichnet, dass**
die Schwenkachse (15) in einem Eckbereich der L-Form gebildet ist.

22. Vorrichtung nach einem der vorangehenden Ansprüche,
**dadurch gekennzeichnet, dass**
der Blendenmitnehmer (47) eine Federklammer ist.

23. Vorrichtung nach einem der vorangehenden Ansprüche,
**dadurch gekennzeichnet, dass**
der Lagerelementmitnehmer (21) eine Arretierungsfeder mit einem Schubabschnitt (79) ist.

24. Tür mit einer Vorrichtung nach einem der Ansprüche 1 bis 23.

25. Fahrzeug mit einer Tür (5) nach Anspruch 24.

## Claims

1. Device (2) for displacing a safety belt (1) of a vehicle into a position convenient for gripping, comprising a guide (3) which comprises a front (3v) and a rear (3h) end and which may be arranged in a vehicle side wall (5), a bearing element (7) which may be moved between a resting position and an operating position along the guide (3), in which a belt strap drive means (9) may be pivoted about a pivot axis (15) for positioning on a belt strap (11) of the safety belt (1) between a retracted position and an extended position, a return spring (17) pretensioning the belt strap drive means (9) in the direction of the retracted position and an actuating element (19) with a bearing element drive means (21), the actuating element (19) being able to be moved to and fro along the guide (3) by means of a drive (23), **characterized in that** the actuating element (19) may be moved counter to an actuating arm (13) integrally connected to the belt strap drive means (9) and tensioning the return spring (17), so that the belt strap drive means (9), located approximately perpendicular to the guide (3) and engaging behind the belt strap (11), projects into a vehicle interior (25) and then a releasable snap connection (27) is formed between the bearing element drive means (21) and the bearing element (7) by means of which the bearing element drive means (21) exerts a displacement force (29) on the bearing element (7) when the drive (23) moves the actuating element (19) forward, in order to move the bearing element (7) with the belt strap (11) forward into a position convenient for gripping, the snap connection (27) being formed such that it is released when the displacement force (29) exceeds the nominal force.

2. Device according to Claim 1, **characterized in that** an unlocking stop (31) is associated with the guide (3) which secures the position convenient for gripping and forms a stop for the bearing element (7) when moved in the forward direction (69).

3. Device according to Claim 1 or 2, **characterized in that** a portion of the guide (3) is formed in a door (33) of the vehicle (door guide (35)) and a portion of the guide (3) in a pillar region (37) of the vehicle (pillar guide (39)) which is located in the direction of travel (69) behind the door (33).

4. Device according to one of the preceding claims, **characterized in that** a cover panel (41) is arranged in a slot (43) of the vehicle side wall (5), along which the bearing element (7) moves.

5. Device according to one of the preceding claims, **characterized in that** at one front end (3v) of the actuating element (19) a cover panel drive means (47) is provided.

6. Device according to one of the preceding claims, **characterized in that** the guide (3) comprises a first (49) and a second (51) guide channel.

7. Device according to Claims 3 and 6, **characterized in that** said device comprises a housing upper shell (53) and a housing lower shell (55) in the door opening (35) and the pillar guide (39), respectively one first (57) and one second (59) profiled guide rail being formed in the shells.(53, 55) such that the first (second) guide rail (57, 59) of the housing upper shell (53) of the first (second) guide rail (57, 59) opposes the respective housing lower shell (55) in order to form the first (second) guide channel (49, 51) in this manner.

8. Device according to Claim 7, **characterized in that** the first guide rail (57) is formed by a groove-like recess in the housing upper shell (53) and/or the respective housing lower shell (55).

9. Device according to one of Claims 7 or 8, **characterized in that** the second guide rail (59) is formed by a projecting rail track of the housing upper shell (53) and/or the associated housing lower shell (55).

10. Device according to Claims 6 and 7, **characterized in that** the bearing element (7) comprises a guide pin (61) for being received in the first guide channel (49) and a bearing profile portion (63) for being received in the first and second guide channel (49, 51).

11. Device according to Claims 8, 9 and 10, **characterized in that** the bearing profile portion (63) comprises two opposing profile projections (65) which are respectively formed to fit, and to be received in, the first guide rail (57), and two opposing constrictions (67) spaced apart therefrom which are respectively formed to fit, and to be received by, the second guide rail (59).

12. Device according to Claim 10, **characterized in that** the length of the guide pin (61) in the direction of travel (69) is greater than a door gap (85).

13. Device according to one of the preceding claims, **characterized in that** the actuating arm (13) is formed to be circular arc-shaped.

14. Device according to one of the preceding claims, **characterized in that** the return spring (17) is a leg spring.

15. Device according to Claim 14, **characterized in that** the leg spring acts with one end on the actuating arm (13) and with the other end on the guide pin (61).

16. Device according to one of the preceding claims, **characterized in that** the actuating element (19) is an actuating rod (71) with a toothed rack (73) which is in engagement with the drive (23), in particular an actuator, via a gear wheel (75).

17. Device according to one of Claims 11 to 16, **characterized in that** the cover panel (41) comprises a cover panel profile portion (77), which is arranged in the guide (3) between the bearing profile portion (63) and the unlocking stop (31).

18. Device according to one of the preceding claims, **characterized in that** the unlocking stop (31) is provided in the guide (3).

19. Device according to Claims 11 and 18, **characterized in that** the unlocking stop (31) and/or the cover panel profile portion (77) are of the same construction as the bearing profile portion (63).

20. Device according to one of the preceding claims, **characterized in that** the actuating arm (13) and the belt strap drive means (9) substantially form an L-shape.

21. Device according to Claim 20, **characterized in that** the pivot axis (15) is formed in a corner region of the L shape.

22. Device according to one of the preceding claims, **characterized in that** the cover panel drive means (47) is a spring clip.

23. Device according to one of the preceding claims, **characterized in that** the bearing element drive means (21) is a locking spring with a thrust portion (79).

24. Door comprising a device according to one of Claims 1 to 23.

25. Vehicle comprising a door (5) according to Claim 24.

## Revendications

1. Dispositif pour déplacer une ceinture de sécurité (1) d'un véhicule en une position avantageuse pour la prise, avec un guidage (3) qui présente une extrémité avant (3v) et une extrémité arrière (3h) et doit être disposé dans une paroi latérale de véhicule (5), un élément de palier (7) déplaçable le long du guidage (3), entre une position de repos et une position de travail, élément de palier dans lequel un organe d'entraînement de bande de ceinture (9), pour application à une bande de ceinture (11) de la ceinture de sécurité (1), est susceptible de pivoter autour d'un axe de pivotement (15), entre une position rétractée par rabattement et une position sortie par rabattement, où un ressort de rappel (17) précontraint l'organe d'entraînement de bande de ceinture (9) dans la direction de la position rétractée par rabattement, et un élément d'actionnement (19) avec un organe d'entraînement d'élément de palier (21), l'élément d'actionnement (19) étant susceptible d'être déplacé le long du guidage (3) au moyen d'un entraînement (23), **caractérisé en ce que** l'élément d'actionnement (19) est déplaçable contre un bras d'actionnement (13), relié solidairement à l'organe d'entraînement de bande de ceinture (9), avec effet de serrage du ressort de rappel, de manière que l'organe d'entraînement de bande de ceinture (9), en étant placé à peu près perpendiculairement au guidage (3), en saisissant par l'arrière la bande de ceinture (11), pénètre dans un habitacle de véhicule (25) et, ensuite, une liaison à déclic (27) désolidarisable est établie entre l'organe d'entraînement d'élément de palier (21) et l'élément de palier (7), liaison au moyen de laquelle l'organe d'entraînement d'élément de palier (21) exerce sur l'élément de palier (7) une force de déplacement (29), lorsque l'entraînement (23) déplace vers l'avant l'élément d'actionnement (19), pour déplacer l'élément de palier (7) avec la bande de ceinture (11) vers l'avant en une position favorable pour la saisie, où la liaison à déclic (27) est réalisée de manière qu'elle soit désolidarisée lorsque la force de déplacement (29) dépasse la force nominale.

2. Dispositif selon la revendication 1, **caractérisé en ce que**, au guidage (3) est associée une butée de déverrouillage (31), fixant la position avantageuse pour la saisie et formant une butée pour l'élément de palier (7), lors du déplacement dans la direction de l'avant (69).

3. Dispositif selon la revendication 1 ou 2, **caractérisé en ce qu'**un tronçon du guidage (3) est formé dans une portière (33) du véhicule (guidage de portière (35)), et un tronçon du guidage (3) est formé dans une zone de colonne (37) du véhicule (guidage de colonne (39)), située derrière la portière (33) en observant dans la direction de roulage (69)

4. Dispositif selon l'une des revendications précédentes, **caractérisé en ce qu'**un écran (41), le long duquel l'élément de palier (7) se déplace, est disposé dans une fente (43) de la paroi latérale de véhicule (5).

5. Dispositif selon l'une des revendications précédentes, **caractérisé en ce qu'**un organe d'entraînement d'écran (47) est prévu sur une extrémité avant (3v) de l'élément d'actionnement (19).

6. Dispositif selon l'une des revendications précédentes, **caractérisé en ce que** le guidage (3) comprend un premier (49) et un deuxième canal de guidage (51).

7. Dispositif selon les revendications 3 et 6, **caractérisé en ce que** celui-ci comprend une coque supérieure de boîtier (53) et une coque inférieure de boîtier (55), dans le guidage de portière (35) et le guidage de colonne (39), sachant que, dans les coques (53, 55), sont chaque fois formées une première (57) et une deuxième (59) glissière de guidage profilée, de manière que la première (deuxième) glissière de guidage (57, 59) de la coque supérieure de boîtier (53) soit placée en regard de la première (deuxième) glissière de guidage (57, 59) de la coque inférieure de boîtier (55) respective pour, de cette manière, former le premier (deuxième) canal de guidage (49, 51).

8. Dispositif selon la revendication 7, **caractérisé en ce que** la première glissière de guidage (57) est formée par un creusement du genre d'une rainure, ménagé dans la coque supérieure de boîtier (53) ou la coque inférieure de boîtier (55) afférente.

9. Dispositif selon l'une des revendications 7 ou 8, **caractérisé en ce que** la deuxième glissière de guidage (59) est formée par un tronçon de glissière, en saillie, de la coque supérieure de boîtier (53) ou de la coque inférieure de boîtier (55) afférente.

10. Dispositif selon les revendications 6 et 7, **caractérisé en ce que** l'élément de palier (7) comprend un tourillon de guidage (61) devant être logé dans le premier canal de guidage (49), et un tronçon de profilé de palier (63) devant être logé dans le premier et le deuxième canal de guidage (49, 51).

11. Dispositif selon les revendications 8, 9 et 10, **caractérisé en ce que** le tronçon de profilé de palier (63) présente deux saillies profilées (65) opposées, formées chacune de façon ajustée par rapport à la première glissière de guidage (57) et devant être logées dans celle-ci, et, à distance de celles-ci, deux étranglements (67) opposés, formés chacun de façon ajustée par rapport à la deuxième glissière de guidage (59) et devant être logés dans celle-ci.

12. Dispositif selon la revendication 10, **caractérisé en ce que** le tourillon de guidage (61) présente, en observant dans la direction de roulage (69), une longueur supérieure à un interstice de portière (85).

13. Dispositif selon l'une des revendications précédentes, **caractérisé en ce que** le bras d'actionnement (13) est formé en arc de cercle.

14. Dispositif selon l'une des revendications précédentes, **caractérisé en ce que** le ressort de rappel (17) est un ressort à branches.

15. Dispositif selon la revendication 14, **caractérisé en ce que** le ressort à branches agit, par une extrémité, sur le bras d'actionnement (13) et, par l'autre extrémité, sur le tourillon de guidage (61).

16. Dispositif selon l'une des revendications précédentes, **caractérisé en ce que** l'élément d'actionnement (19) est une tige d'actionnement (71) munie d'une crémaillère (73), qui, par l'intermédiaire d'une roue dentée (75), s'engrène avec l'entraînement (23), en particulier avec un servomoteur.

17. Dispositif selon l'une des revendications 11 à 16, **caractérisé en ce que** l'écran (41) présente un tronçon profilé d'écran (77), disposé dans le guidage (3), entre le tronçon profilé de palier (63) et la butée de déverrouillage (31).

18. Dispositif selon l'une des revendications précédentes, **caractérisé en ce que** la butée de déverrouillage (31) est prévue dans le guidage (3).

19. Dispositif selon les revendications 11 et 18, **caractérisé en ce que** la butée de déverrouillage (31) et/ou le tronçon profilé d'écran (77) est/sont de construction identique au tronçon de profilé de palier (63).

20. Dispositif selon l'une des revendications précédentes, **caractérisé en ce que** le bras d'actionnement (13) et l'organe d'entraînement de bande de ceinture (9) sont conformés sensiblement en L.

21. Dispositif selon la revendication 20, **caractérisé en ce que** l'axe de pivotement (15) est formé dans une zone d'angle de la forme de L.

22. Dispositif selon l'une des revendications précédentes, **caractérisé en ce que** l'organe d'entraînement d'écran (47) est une agrafe à ressort.

23. Dispositif selon l'une des revendications précédentes, **caractérisé en ce que** l'organe d'entraînement d'élément de palier (21) est un ressort de blocage, muni d'un tronçon de poussée (79).

24. Portière munie d'un dispositif selon l'une des revendications 1 à 23.

25. Véhicule muni d'une portière (5) selon la revendication 24.
